# EUROPEAN PATENT APPLICATION

(11) **EP 2 525 455 A1**
(43) Date of publication of application: **21.11.2012**
(21) Application number: 11732777.5
(22) Date of filing: 12.01.2011
(51) Int. Cl.: H02B 13/02, H01H 33/64

(54) **GAS INSULATED SWITCHGEAR**

(30) Priority: 12.01.2010 JP 2010004209
(71) Applicant: Kabushiki Kaisha Toshiba, Minato-ku Tokyo 105-8001 (JP)
(72) Inventor: SHIRAI, Hideaki, Tokyo 105-8001 (JP); NAKANO, Osamu, Tokyo 105-8001 (JP); TAKEI, Masafumi, Tokyo 105-8001 (JP); FUJIWARA, Kaneharu, Tokyo 105-8001 (JP); SHIIKI, Motoharu, Tokyo 105-8001 (JP)
(74) Representative: HOFFMANN EITLE
(86) International application number: PCT/JP2011/000099
(87) International publication number: WO 2011/086902

(57) **Abstract**

A gas-insulated switchgear of which frictional force and abrasion amount at a sliding portion are small, and capable of maintaining a state having the small frictional force and abrasion amount for a long time is provided. Insulating gas is sealed in a container of a bus integral disconnecting switch 27 of a gas-insulated switchgear 10, and a movable side contact portion 31, a fixed side contact portion 32, and a movable contact 33 are provided to constitute a disconnecting portion 30. Besides, a hard carbon film 50 is formed at an outer peripheral surface of the movable contact 33 except portions which are in contact with contact terminals 32a of the fixed side contact portion 32 under a state in which the movable contact 33 is inserted into the fixed side contact portion 32 and electrically connected therewith and portions which are in contact with contact terminals 31a of the movable side contact portion 31 under an electrically disconnected state.

## Description

### TECHNICAL FIELD

Embodiments of the present invention relate to a gas-insulated switchgear.

### BACKGROUND

A gas-insulated switchgear is constituted by switches for large power such as a circuit breaker breaking a large current in case of an accident, a disconnecting switch turning on and off an electric circuit and an earthing switch for earthing, and a bus connecting circuits to a transformer, and so on. For example, there is a possibility that a fatal problem such as an electric power failure in a power transmission and transformation system occurs when the gas-insulated switchgear is out of order. Accordingly, high reliability is required in performance, and a requirement for a maintenance-free device free from stopping an electric power system, becomes high in the gas-insulated switchgear.

The gas-insulated switchgear includes various switches as stated above, and there are many sliding portions at opening/closing mechanism portions and contact portions thereof. Besides, disconnection of the bus is also performed via the sliding portion. Further, when a displacement caused by thermal expansion and contraction, an earthquake, and so on is absorbed, it is performed via the sliding portion. Therefore, the sliding portion is required to have fine sliding characteristics of which frictional force and abrasion amount are small, and in which deterioration and decrease of lubricant are small.

In a conventional gas-insulated switchgear, there is a case in which grease and lubricating oil being a publicly known art applied for general equipments are coated for the sliding portion. Further, the frictional force and the abrasion amount are made small by using a synthetic resin material and an art combining the synthetic resin material and the lubricant for the sliding portion at a portion where a load is large and a sliding amount is large, and so on.

### RELEVANT REFERENCES

### Patent Reference

Reference 1: JP-A 2001-132757 (KOKAI)

### SUMMARY

### Problems to Be Solved by the Invention

There has been a problem in which the grease and the lubricating oil at the sliding portion are scattered and deteriorated resulting from a long time usage, and thereby, the frictional force becomes large in the above-stated conventional gas-insulated switchgear.

Besides, there is a case when a low-friction material of the synthetic resin material represented by Teflon (trademark) is used when a sliding area of the sliding portion in the conventional gas-insulated switchgear is large, but the low-friction material may be peeled off from a base material caused by a long time usage thereof. Accordingly, there is a problem in adhesiveness with the base material.

The present invention is made to solve the above-stated problems, and an object thereof is to provide a gas-insulated switchgear of which frictional force and abrasion amount at a sliding portion are small, and capable of sustaining a state of the small frictional force and abrasion amount for a long time.

### Means for Solving the Problems

A gas-insulated switchgear according to an embodiment includes: a disconnecting portion including a fixed side contact portion, a movable side contact portion disposed to face the fixed side contact portion, and a movable contact slidably inserted into the movable side contact portion and electrically opening/closing between the fixed side contact portion and the movable side contact portion, in a container where insulated gas is sealed. Besides, a hard carbon film is formed at least at a part of a sliding surface at the disconnecting portion where the movable contact slides.

### BRIEF DESCRIPTION OF THE DRAWINGS

[Fig. 1] Fig. 1 is a side view illustrating a configuration of a gas-insulated switchgear according to an embodiment of the present invention.
[Fig. 2] Fig. 2 is a view illustrating a cross section of a disconnecting portion in a bus integral disconnecting switch of the gas-insulated switchgear according to the embodiment of the present invention.
[Fig. 3] Fig. 3 is a view illustrating a cross section of a shaft turning a lever member to drive a movable contact of the gas-insulated switchgear according to the embodiment of the present invention.
[Fig. 4] Fig. 4 is a view illustrating a cross section of a disconnecting portion having another configuration in the bus integral disconnecting switch of the gas-insulated switchgear according to the embodiment of the present invention.
[Fig. 5] Fig. 5 is a view illustrating a cross section of a structure of a flange portion at an end portion of a container of the gas-insulated switchgear according to the embodiment of the present invention.
[Fig. 6] Fig. 6 is a view illustrating a cross section of a conductor connecting portion of a bus conductor of the gas-insulated switchgear according to the embodiment of the present invention.
[Fig. 7] Fig. 7 is a side view when a sliding leg and a pedestal at a bus of the gas-insulated switchgear according to the embodiment of the present invention is seen from a side surface.

### DETAILED DESCRIPTION

Hereinafter, embodiments of the present invention are described with reference to the drawings.

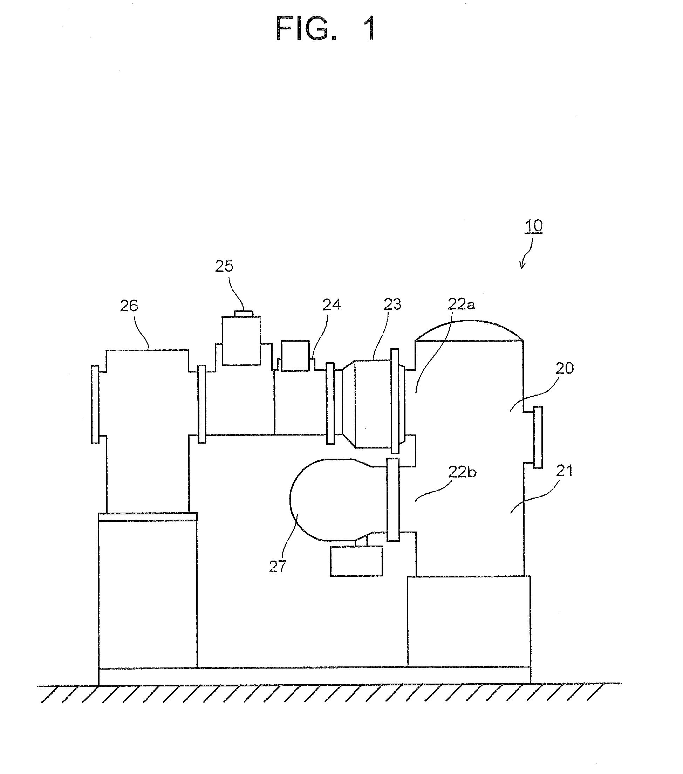

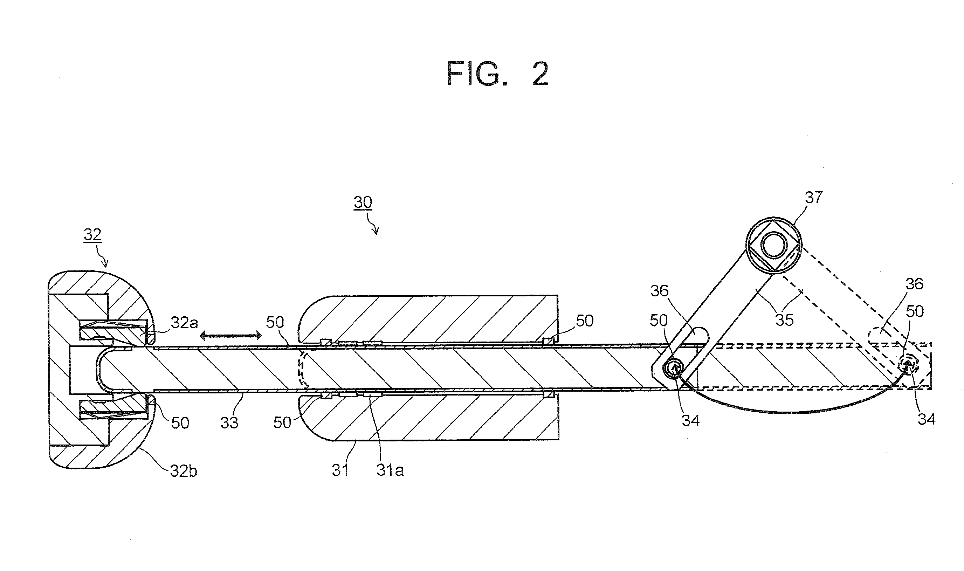

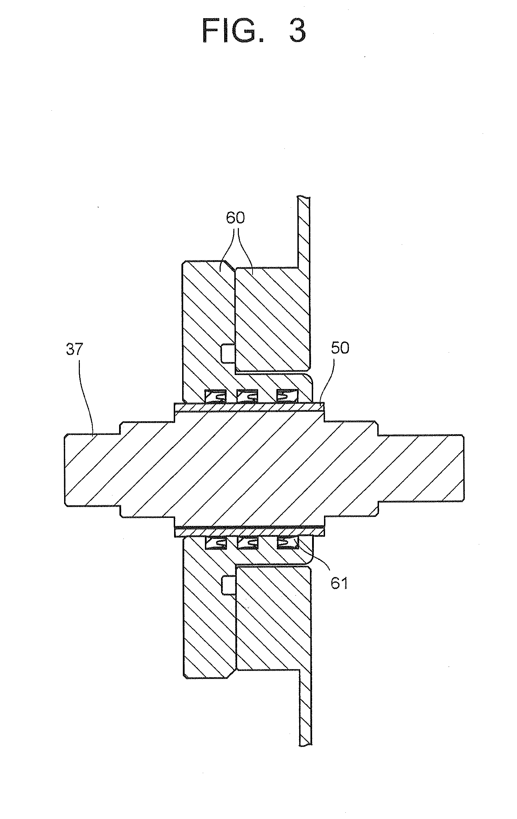

Fig. 1 is a side view illustrating a configuration of a gas-insulated switchgear 10 according to an embodiment of the present invention. Fig. 2 is a view illustrating a cross section of a disconnecting portion 30 in a bus integral disconnecting switch 27. Fig. 3 is a view illustrating a cross section of a shaft 37 turning a lever member 35 to drive a movable contact 33.

As illustrated in Fig. 1, a circuit breaker 20 is located such that an axis of a container 21 is in perpendicular to an installation surface in the gas-insulated switchgear 10. A current transformer 23 is provided at an upper lead portion 22a of the circuit breaker 20, and is connected to a cable head 26 via a disconnecting switch 24 and a ground switch 25. Besides, a lower lead portion 22b of the circuit breaker 20 is connected to a bus conductor via the bus integral disconnecting switch 27.

Here, a configuration of the disconnecting portion 30 in the bus integral disconnecting switch 27 is described.

For example, insulating gas such as SF₆ gas is sealed in a container of the bus integral disconnecting switch 27. Besides, a movable side contact portion 31, a fixed side contact portion 32, and the movable contact 33 are provided in the container to constitute the disconnecting portion 30 as illustrated in Fig. 2. Note that the fixed side contact portion 32 is connected to a conductor branched from the bus conductor though it is not illustrated.

The movable side contact portion 31 is preferable to be provided at a position to face the fixed side contact portion 32, and each of center axes along a moving direction of the movable contact 33 is approximately the same axis. The movable contact 33 is slidably inserted into the movable side contact portion 31. This movable contact 33 electrically opens and closes between the movable side contact portion 31 and the fixed side contact portion 32.

A cylindrical pin 34 being a connection member is provided at one end of the movable contact 33, and this pin 34 is slidably connected to a long hole shaped groove 36 formed at one end of the lever member 35. The other end of the lever member 35 is connected to the shaft 37 transmitting a rotational driving force generated by an operation mechanism disposed at outside of the container of the bus integral disconnecting switch 27 to the lever member 35. The rotational driving force transmitted from the shaft 37 is thereby transmitted to the movable contact 33 via the lever member 35, the movable contact 33 slides in the movable side contact portion 31, and the electrical opening/closing (electrical contact or break) with the fixed side contact portion 32 is enabled.

Here, a hard carbon film 50 is formed at an outer peripheral surface of the movable contact 33 except portions which are in contact with contact terminals 32a of the fixed side contact portion 32 under a state in which the movable contact 33 is inserted into the fixed side contact portion 32, and an electrically connected state(closed state) (a state illustrated by a solid line in Fig. 2), and portions which are in contact with contact terminals 31a of the movable side contact portion 31 under an electrically disconnected state (open state) (a state illustrated by a dotted line in Fig. 2). Besides, the hard carbon film 50 is formed at an inside diameter surface of a shield 32b of the fixed side contact portion 32 which is brought into contact with a side surface of the movable contact 33 as illustrated in Fig. 2. Besides, the hard carbon film 50 may be formed at an internal surface of the movable side contact portion 31.

Besides, the hard carbon film 50 is formed at a surface of the pin 34 connecting one end of the movable contact 33 to the long hole shaped groove 36 at one end of the lever member 35. Note that it is preferable that the hard carbon film 50 is formed at least at the surface of the pin 34, or at a sliding surface with the pin 34 in the long hole shaped groove 36 at one end of the lever member 35 where the pin 34 slides. Besides, the hard carbon film 50 may be formed at both of the surface of the pin 34 and the sliding surface with the pin 34 at the long hole shaped groove 36.

Besides, the shaft 37 turning the lever member 35 to drive the movable contact 33 is rotatably provided while penetrating a container 60 of the bus integral disconnecting switch 27, and the penetrating portion is air-tightly sealed as illustrated in Fig. 3. Packings 61 made of nitrile rubber (NBR) and so on are used as a sealing structure body between an internal surface of a through hole provided at the container 60 of the bus integral disconnecting switch 27 and the shaft 37 constituting the penetrating portion. Further, the hard carbon film 50 is formed at outer peripheral surfaces of the shaft 37 sliding with the packings 61.

Here, the hard carbon film 50 is described.

The hard carbon film 50 is made up of a material of which friction coefficient is small and hardness is high. Specifically, it is formed by a diamond-like carbon (DLC) and so on. The hard carbon film 50 made up of the DLC is high hardness, and therefore, an abrasion amount thereof is small. Accordingly, it is possible to obtain fine sliding characteristics of which resistance force is small and abrasion amount is small by including the hard carbon film 50 made up of the DLC. Besides, this DLC is excellent in corrosion resistance.

Here, a formation method of a film of the DLC is described.

The DLC film is formed by the plasma CVD method using methane gas as a raw material, or the sputtering method using a solid carbon as the raw material.

In the plasma CVD method, it is possible to perform a coating at around room temperature, but a large amount of hydrogen is mixed into the film, and therefore, the hardness of the film cannot be made so high (for example, approximately 2000 at the maximum in Vickers hardness (HV)). Besides, in the plasma CVD method, when the film made up of the DLC is formed at predetermined surfaces of portions constituted by metals such as the above-stated pin 34, lever member 35, movable contact 33, shaft 37, at first, it is preferable to form a film of such as silicon (Si) excellent in reactivity with carbon (C) and improving adhesion strength of the DLC as a base at surfaces of the metals.

On the other hand, in the sputtering method, it is possible to form a high hardness film (for example, approximately 4500 at the maximum in Vickers hardness (HV)) because a hydrogen amount can be reduced through it is necessary to be heated to 200°C to 300°C. Besides, in the plasma CVD method, when the film made up of the DLC is formed at the predetermined surfaces of portions constituted by metals such as the above-stated pin 34, lever member 35, movable contact 33, shaft 37, at first, it is preferable to form a film such as tungsten (W), chromium (Cr) excellent in reactivity with carbon and having predetermined hardness as a base at the surfaces of the metals. The film of tungsten (W), chromium (Cr), and so on having a predetermined hardness is included as the base, and thereby, it is possible to suppress damages such that the DLC film is cracked, peeled, and so on even if base materials of the above-stated pin 34, lever member 35, movable contact 33, shaft 37, and so on are deformed. Note that the pin 34, the lever member 35, the movable contact 33, the shaft 37 and so on are made up by metals such as, for example, aluminum, copper, stainless steel, chromium-molybdenum steel.

Note that when a base layer and a DLC layer are formed in the sputtering method, it is preferable to include an inclined composition layer between the base layer and the DLC layer in which a concentration of the DLC increases and a concentration of a material constituting the base layer decreases from the base layer to the DLC layer. This inclined composition layer is able to be formed by, for example, gradually decreasing a vapor deposition amount of metal forming the base layer, and on the other hand, gradually increasing a vapor deposition amount of the DLC. This inclined composition layer is included, and thereby, it is possible to suppress a stress concentration generated between the base layer and the DLC layer, and an occurrence of a peeling off.

A thickness of the hard carbon film 50 formed by the above-stated method is preferable to be approximately 1 µm to 2 µm in consideration of an engaging size of components considering a transmission efficiency of a driving force and smooth operational characteristics, a residual stress of the film, the adhesion strength and a film formation cost.

Besides, a hydrogen content in the DLC forming the hard carbon film 50 is preferable to be approximately 10 at% or less. This range is preferable because the high hardness film can be obtained as the hydrogen content is small.

Besides, the hardness of the hard carbon film 50 is preferable to be 1500 or more in the Vickers hardness (HV). Here, it is desirable that the hardness of the hard carbon film 50 is not set to be the same as a hardness of a sliding object surface.

Next, operations of the disconnecting portion 30 at the bus integral disconnecting switch 27 are described.

When a rotational driving force generated by a turning mechanism disposed at outside of the container of the bus integral disconnecting switch 27 is transmitted to the shaft 37, the lever member 35 rotates centering on the shaft 37. The pin 34 of the movable contact 33 slides in the long hole shaped groove 36 at one end of the lever member 35, and the movable contact 33 is driven. At this time, the hard carbon film 50 is formed at least at one of the surface of the pin 34 and the sliding surface of the groove 36 of the lever member 35, and therefore, the fine sliding characteristics of which resistance force is small and abrasion amount is small can be obtained.

The movable contact 33 is driven, the movable contact 33 slides in the movable side contact portion 31, and a tip portion of the movable contact 33 is inserted into the fixed side contact portion 32 from an inside diameter surface of the shield 32b of the fixed side contact portion 32. The contact terminals 32a of the fixed side contact portion 32 are brought into contact with portions where the hard carbon film 50 is not formed at a side surface of the tip portion of the movable contact 33, and it becomes the electrically closed state (the state illustrated by the solid line in Fig. 2). At this time, it is also possible to obtain the fine sliding characteristics of which resistance force is small and abrasion amount is small owing to the hard carbon film 50 formed at the sliding surface of the movable side contact portion 31 and the hard carbon film 50 formed at a peripheral surface of the movable contact 33.

Note that, here, the operation and effect in a process in which the movable contact 33 slides in the movable side contact portion 31, the tip portion of the movable contact 33 is inserted into the fixed side contact portion 32 from an opening of the shield 32b of the fixed side contact portion 32 are described, but the fine sliding characteristics can similarly be obtained also in a case when the tip portion of the movable contact 33 is withdrawn from inside of the fixed side contact portion 32.

As stated above, the hard carbon film 50 made up of the diamond-like carbon (DLC) is formed at the sliding surface in the bus integral disconnecting switch 27 of the gas-insulated switchgear 10 according to the embodiment, and thereby, the fine sliding characteristics of which resistance force is small and abrasion amount is small can be obtained.

Besides, it is possible to constitute the sliding portion in which the lubricant such as the grease is not necessary. Besides, the sliding between the fixed side contact portion 32 and the movable contact 33 is tolerated, and thereby, a centering adjustment in which the center axes of the movable side contact portion 31 and the movable contact 33 along a moving direction of the movable contact 33 are approximately set to be the same axis becomes easy, and an assembly performance improves. It is thereby possible to provide the gas-insulated switchgear with high reliability.

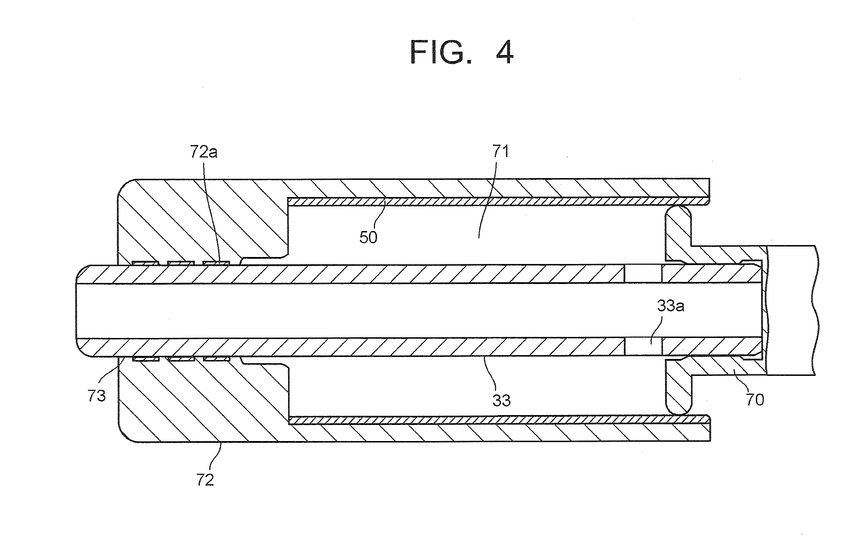

Here, a configuration of the bus integral disconnecting switch 27 is not limited to the above-stated configuration. Fig. 4 is a view illustrating a cross section of the disconnecting portion 30 having another configuration in the bus integral disconnecting switch 27.

In the disconnecting portion 30 illustrated in Fig. 4, the movable contact 33 is constituted by a cylindrical member, and one end side thereof (a side inserted to the fixed side contact portion 32) is opened. Besides, a piston portion 70 is provided at the other end side of the movable contact 33, and an opening of the other end is closed. The movable contact 33 is slidably disposed in a tubular cylinder 72 including a buffer chamber 71 made up of a space. This cylinder 72 functions as a movable side contact portion.

Further, a communication port 33a communicating between an inside of the movable contact 33 and the buffer chamber 71 is formed at a side wall of the movable contact 33 at the piston portion 70 side. The communication port 33a is formed at least one in a circumferential direction of the movable contact 33. Note that when the communication ports 33a are formed in plural, it is preferable to be formed equally in the circumferential direction of the movable contact 33.

Besides, a cylindrical pin is included at one end portion of the piston portion 70 (an end portion at a different side from the movable contact 33 side) though it is not illustrated as same as the above-stated movable contact 33, and it is slidably connected to the long hole shaped groove 36 formed at one end of the lever member 35.

A slide passage portion 73 having a diameter slightly larger than an outside diameter of the movable contact 33 is formed at the fixed side contact portion 32 side of the cylinder 72 to thereby enable the sliding of the movable contact 33. Contact terminals 72a are provided at an inner peripheral surface of the slide passage portion 73.

On the other hand, the buffer chamber 71 having a passage diameter larger than a passage diameter of the slide passage portion 73 is constituted at the piston portion 70 side from the slide passage portion 73 (at the right side than the slide passage portion 73 in Fig. 4). As illustrated in Fig. 4, the hard carbon film 50 is formed at an inner peripheral surface of the cylinder 72 constituting the buffer chamber 71. An outer peripheral surface of the piston portion 70 slides on the inner peripheral surface of the cylinder 72. Note that the hard carbon film may be formed at the outer peripheral surface of the piston portion 70 instead of forming the hard carbon film 50 at the inner peripheral surface of the cylinder 72 constituting the buffer chamber 71. Further, the hard carbon films may be formed at both of the inner peripheral surface of the cylinder 72 constituting the buffer chamber 71 and the outer peripheral surface of the piston portion 70.

At the disconnecting portion 30, the lever member 35 rotates centering on the shaft 37 when the rotational driving force generated by the turning mechanism disposed at outside of the container of the bus integral disconnecting switch 27 is transmitted to the shaft 37 as same as the above-stated movable contact 33 (refer to Fig. 2). The pin (not-illustrated) of the movable contact 33 slides in the long hole shaped groove 36 at one end of the lever member 35 and the movable contact 33 is driven.

When the movable contact 33 is driven in a direction inserting the tip thereof into the fixed side contact portion (the left direction in Fig. 4), a volume of a space where the insulating gas such as SF₆ gas is filled in the buffer chamber 71 decreases. When the volume of the space where the insulating gas is filled in the buffer chamber 71 decreases, the insulating gas in the buffer chamber 71 is guided into the movable contact 33 via the communication port 33a of the movable contact 33, and ejected from an opening at the tip of the movable contact 33.

On the other hand, when the movable contact 33 is driven in a direction moving the tip thereof into the cylinder 72 (the right direction in Fig. 4), the insulating gas is guided into the movable contact 33 from the opening at the tip of the movable contact 33 because the space in the buffer chamber 71 is expanded. The insulating gas guided into the movable contact 33 is guided into the buffer chamber 71 via the communication port 33a of the movable contact 33. In the above-stated process, the ejection or suction of the insulating gas occurs at the tip of the movable contact 33, and an arc generated between the tip of the movable contact 33 and the contact terminals 32a of the fixed side contact portion 32 is extinguished in a short time at a current opening/closing time.

According to the disconnection portion 30 having another configuration as stated above, the hard carbon film 50 is formed at the inner peripheral surface of the cylinder 72 constituting the buffer chamber 71, and thereby, the fine sliding characteristics of which resistance force is small and abrasion amount is small can be obtained when the movable contact 33 is driven. Besides, it is possible to constitute the sliding portion in which the lubricant such as the grease is not necessary. It is thereby possible to provide the gas-insulated switchgear with high reliability.

### (Other Embodiments)

### (Configuration of Flange Portion)

Here, a component in which the hard carbon films 50 similar to the above-stated embodiment are included at the sliding surface other than the bus integral disconnecting switch 27 is described. Note that the formation method of the hard carbon film 50 is as same as the aforementioned method.

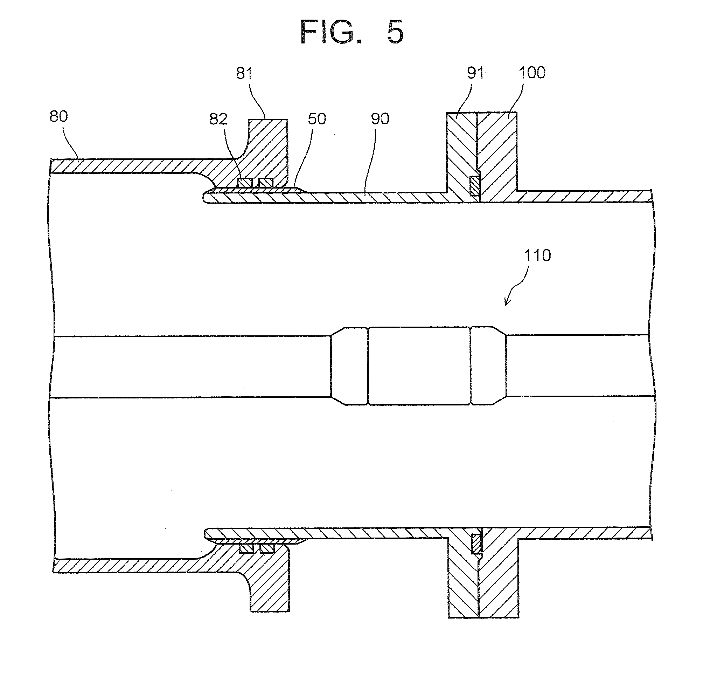

Fig. 5 is a view illustrating a cross section of a structure of a flange portion at an end portion of a container where the insulating gas is sealed. Note that the same reference numerals are added to the same parts as the configuration of the gas-insulated switchgear 10 of the above-stated embodiment, and redundant descriptions are not given or simplified.

The structure of the flange portion illustrated in Fig. 5 is applied for, for example, a container of a detachable bus and so on. As illustrated in Fig. 5, a container flange 81 is provided at an end portion of a container 80 where the insulating gas is sealed. One end of a cylindrical tube 90 is inserted into an inner peripheral surface of the container flange 81. Besides, a cylindrical flange 91 is provided at the other end of the cylindrical tube 90. This cylindrical flange 91 is connected to a flange 100 being an equipment adjacent thereto. For example, a bus conductor 110 and so on is derived from the container 80 to the adjacent equipment via the cylindrical flange 91 as illustrated in Fig. 5.

Besides, packings 82 are provided at an inner peripheral surface of the container flange 81 to maintain air-tightness between the inner peripheral surface of the container flange 81 and an outer peripheral surface of the cylindrical tube 90. Besides, the hard carbon film 50 is formed at the outer peripheral surface at one end side of the cylindrical tube 90. One end side of the cylindrical tube 90 is slidably connected relative to the container flange 81 under a state in which the air-tightness is maintained by the packings 82.

As stated above, the hard carbon film 50 is formed at the outer peripheral surface at one end side of the cylindrical tube 90 to be slidable to the inner peripheral surface of the container flange 81, and thereby, the fine sliding characteristics of which resistance force is small and abrasion amount is small can be obtained. Besides, it is possible to suppress abrasion and deformation of the packing 82, and therefore, the air-tightness can be maintained for a long period of time. Further, workability such as detachment and connection with the adjacent equipment can be improved. Besides, it is possible to constitute the sliding portion in which the lubricant such as the grease is not necessary.

### (Structure of Bus Conductor)

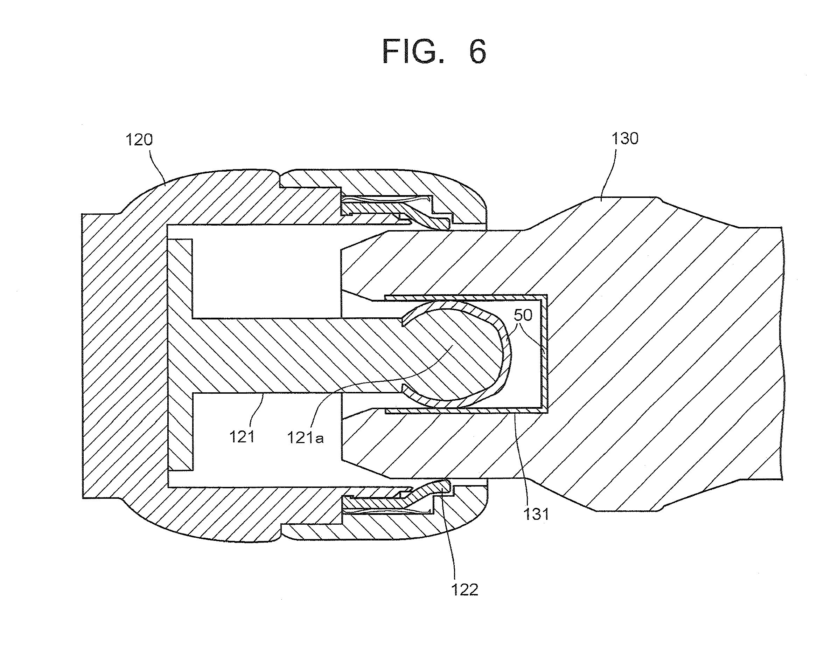

Fig. 6 is a view illustrating a cross section of a conductor connection portion of a bus conductor.

As illustrated in Fig. 6, a convex slide contact portion 121 is provided at a bus conductor 120 in a conductor connection portion. On the other hand, a concave slide contact portion 131 is provided at a bus conductor 130 connected to the bus conductor 120. The convex slide contact portion 121 of the bus conductor 120 is engaged with the concave slide contact portion 131 of the bus conductor 130, and thereby, both of the bus conductors 120, 130 are connected.

Besides, the hard carbon film 50 is formed at least at either one of an outer peripheral surface of a tip portion 121 a of the convex slide contact portion 121 of the bus conductor 120 or an inner peripheral surface of the concave slide contact portion 131 of the bus conductor 130. Note that the hard carbon film 50 may be formed at both of the outer peripheral surface of the tip portion 121a of the convex slide contact portion 121 and the inner peripheral surface of the concave slide contact portion 131.

Besides, contact terminals 122 are provided at an inner periphery of the bus conductor 120, and they are electrically brought into contact with an outer peripheral surface of the bus conductor 130 when it is connected to the bus conductor 130.

Here, the convex slide contact portion 121 of the bus conductor 120 and the concave slide contact portion 131 of the bus conductor 130 are engaged, and thereby, both of the bus conductors 120, 130 are electrically connected and a supporting function between both of the bus conductors 120, 130 is also exhibited by this engagement.

In the above-stated configuration of the conductor connection portion, for example, there is a case when center axes of the bus conductor 120 and the bus conductor 130 displace affected by the earthquake, the thermal expansion, and so on, but the displacement can be absorbed by the sliding of the tip portion 121 a of the convex slide contact portion 121 with the inner peripheral surface of the concave slide contact portion 131. At this time, the hard carbon film 50 is formed at least at either one of the outer peripheral surface of the tip portion 121a of the convex slide contact portion 121 or the inner peripheral surface of the concave slide contact portion 131, and therefore, the fine sliding characteristics of which resistance force is small and abrasion amount is small, can be obtained. Besides, it is possible to constitute the sliding portion which does not require the lubricant such as the grease.

### (Structure of Sliding Leg and Pedestal)

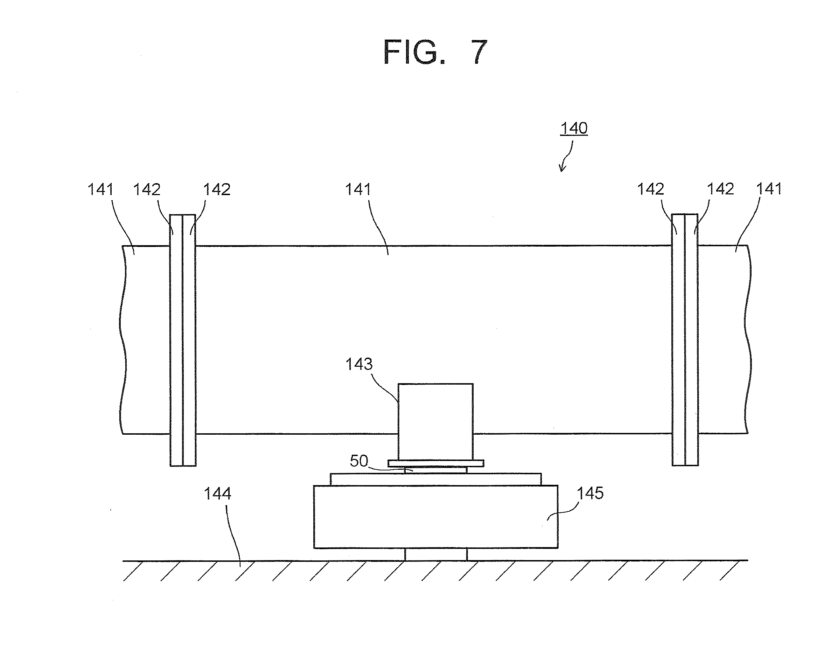

Fig. 7 is a side view when a sliding leg and a pedestal at a bus 140 are seen from a side surface.

As illustrated in Fig. 7, the bus 140 houses a bus conductor (not-illustrated) inside thereof and includes a container 141 in which the insulating gas is sealed. The plural containers 141 constituting the plural buses 140 are integrally connected via flanges 142 to constitute a bus conductor group. Besides, sliding legs 143 are included at lower portions of each of the containers 141 with a predetermined interval, and this sliding leg 143 is supported from downward by a pedestal 145 placed on a base 144.

Besides, the hard carbon film 50 is formed at least at either one of a contact surface of the pedestal 145 which is in contact with the sliding leg 143 or a contact surface of the sliding leg 143 which is in contact with the pedestal 145. Note that the hard carbon film 50 may be formed at both of the contact surfaces.

In the above-stated constitution of the sliding leg and the pedestal, for example, when the bus 140 is displaced affected by the earthquake, the thermal expansion, and so on, the displacement can be absorbed by the sliding of the sliding leg 143 and the pedestal 145 at the sliding surfaces thereof. At this time, the hard carbon film 50 is formed at least at either one of the contact surface of the pedestal 145 which is in contact with the sliding leg 143 or the contact surface of the sliding leg 143 which is in contact with the pedestal 145, and therefore, the fine sliding characteristics of which resistance force is small and abrasion amount is small can be obtained. Besides, the abrasion amount at the hard carbon film 50 is small, and therefore, the fine sliding characteristics can be obtained for a long period of time.

### (Example and Comparative example)

Here, rotational torques when the hard carbon film was formed at the outer peripheral surface of the shaft (example) and when sliding grease was coated on the shaft (comparative example) were measured.

As the example, the rotational torque was measured in a testing equipment in which the hard carbon film was formed at the outer peripheral surface of the shaft sliding with the packings as illustrated in Fig. 3. As the comparative example, the rotational torque was measured in a testing equipment in which the sliding grease was coated on the shaft instead of the hard carbon film of the testing equipment used in the example.

The measurement of the rotational torque was performed by rotating the shaft after it was left for a certain period of time and measuring the rotational torque on an assumption of an actual usage state. As a result of the measurement, a torque value of the one in which the hard carbon film was formed at the shaft (example) was 50% to 70% relative to a torque value of the one in which the sliding grease was coated on the shaft (comparative example).

According to the above-described embodiments, the frictional force and the abrasion amount at the sliding portion are small, and it becomes possible to sustain the state in which the frictional force and the abrasion amount are small for a long period of time.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A gas-insulated switchgear configured to provide a disconnecting portion made up by including a fixed side contact portion, a movable side contact portion disposed to face the fixed side contact portion, and a movable contact slidably inserted into the movable side contact portion and electrically opening/closing between the fixed side contact portion and the movable side contact portion, in a container where insulated gas is sealed,
wherein a hard carbon film is formed at least at a part of a sliding surface at the disconnecting portion where the movable contact slides.

2. The gas-insulated switchgear according to claim 1,
wherein the hard carbon film is formed at an outer peripheral surface of the movable contact other than portions which are in contact with contact terminals of the fixed side contact portion under a state in which a tip portion of the movable contact is inserted into the fixed side contact portion, and the fixed side contact portion and the movable side contact portion are electrically connected.

3. The gas-insulated switchgear according to claim 1 or claim 2, further comprising:
a lever member to drive the movable contact; and
a shaft rotatably provided at the container while penetrating and keeping air-tightness, and transmitting a rotational driving force of a turning mechanism provided at outside of the container to the lever member,
wherein the hard carbon film is formed at least at one of a sliding surface of the container which is penetrated by the shaft with the shaft, and a sliding surface of the shaft sliding with the sliding surface of the container.

4. The gas-insulated switchgear according to any one of claims 1 to 3,
wherein the movable side contact portion is made up of a cylindrical container including a slide passage portion sliding with the movable contact at the fixed side contact portion side, and having a buffer portion communicated to the slide passage portion and of which passage cross section area is larger than the slide passage portion;
wherein the movable contact is made up of a cylindrical member of which one end at the fixed side contact portion side opens and having a communication port communicating between an inside of the movable contact and the buffer portion at a side portion at the other end side;
wherein a piston portion provided at the other end of the movable contact and moving together with the movable contact by sliding with an inner peripheral surface of the buffer portion is further included; and
wherein the hard carbon film is formed at least at one of the inner peripheral surface of the buffer portion where the piston portion slides and a sliding surface of the piston portion sliding at the inner peripheral surface of the buffer portion.

5. The gas-insulated switchgear according to any one of claims 1 to 4,
wherein the container includes a container flange to which one end of a pipe is slidably connected while keeping air-tightness with one end of the pipe to connect an adjacent equipment container of an adjacent equipment provided at outside of the container and the container; and
wherein the hard carbon film is formed at least at one of an outer peripheral surface at one end of the pipe sliding with an inner peripheral surface of the container flange and the inner peripheral surface of the container flange with which the outer peripheral surface at one end of the pipe slides.

6. A gas-insulated switchgear configured to provide conductors housed in a container in which insulating gas is sealed and connected via a conductor connecting portion,
wherein the conductor connecting portion is made up by engaging and electrically connecting a convex slide contact portion formed at an end portion of one conductor and a concave slide contact portion formed at an end portion of the other conductor; and
wherein a hard carbon film is formed at least at one of a sliding surface of the convex slide contact portion with the concave slide contact portion and a sliding surface of the concave slide contact portion with the convex slide contact portion.

7. A gas-insulated switchgear, comprising:
a bus group in which plural buses made up by each housing a conductor in a container in which insulating gas is sealed are integrally connected via flanges;
sliding legs provided at lower portions of the containers with a predetermined interval; and
pedestals supporting the sliding legs from downward and provided on a base,
wherein a hard carbon film is formed at least at one of a contact surface of the pedestal which is in contact with the sliding leg and a contact surface of the sliding leg which is in contact with the pedestal.

8. The gas-insulated switchgear according to any one of claims 1 to 7,
wherein the hard carbon film is a film made up of a diamond-like carbon (DLC).
